# EUROPÄISCHE PATENTSCHRIFT

(11) **EP 0 630 315 B1**
(45) Veröffentlichungstag und Bekanntmachung des Hinweises auf die Patenterteilung: **28.05.1997**
(21) Anmeldenummer: 93905307.0
(22) Anmeldetag: 06.03.1993
(51) Int. Cl.: B29B 17/02, B07B 13/00

(54) **VERFAHREN UND VORRICHTUNGEN ZUM AUSSORTIEREN THERMOPLASTISCHER KUNSTSTOFFTEILE AUS EINEM GEMENGESTROM**
PROCESS AND DEVICES FOR SEPARATING THERMOPLASTIC COMPONENTS FROM A MIXED STREAM
PROCEDE ET DISPOSITIFS PERMETTANT DE SEPARER DES CONSTITUANTS THERMOPLASTIQUES A PARTIR D'UN FLUX MELANGE

(30) Priorität: 09.03.1992 DE 4207398
(43) Veröffentlichungstag der Anmeldung: 28.12.1994
(73) Patentinhaber: STRICKER, Urban, D-57271 Hilchenbach (DE); SIEBERT, Martin, D-12161 Berlin (DE)
(72) Erfinder: STRICKER, Urban, D-57271 Hilchenbach (DE); SIEBERT, Martin, D-12161 Berlin (DE)
(74) Vertreter: Valentin, Ekkehard, Dipl.-Ing.
(86) Internationale Anmeldenummer: EP9300509
(87) Internationale Veröffentlichungsnummer: WO9317852

(56) Entgegenhaltungen:
- WO-A-88/00098
- GB-A- 2 240 731
- US-A- 3 793 424
- PATENT ABSTRACTS OF JAPAN vol. 3, no. 46 (C-43)18. April 1979 & JP-A-54 022 477 (NIPPON KOKAN K.K.) 20 February 1979
- PATENT ABSTRACTS OF JAPAN vol. 3, no. 7 (C-34)24. Januar 1979 & JP-A-53 129 268 (NIPPON KOKAN K.K.) 11 November 1978
- PATENT ABSTRACTS OF JAPAN vol. 5, no. 135 (M-85)(807) 27. August 1981 & JP-A-56 070 915 (NIPPON DENSHIN DENWA KOSHA) 13 June 1981
- SOVIET INVENTIONS ILLUSTRATED Section Ch, Week 8751, 10. Februar 1988 Derwent Publications Ltd., London, GB; Class A35, Page 1,2, AN 87-361319/51 & SU, A, 1 310 229 (SEMIPALATINSK MEAT) 15 May 1987

## Beschreibung

Die Erfindung betrifft ein Verfahren zum Aussortieren thermoplastischer Kunststoffteile aus einem Gemengestrom beim Sortieren unterschiedlicher thermoplastischer Kunststoffsorten im Kontakt mit Separierkörpern; die Erfindung betrifft auch Vorrichtungen zur Durchführung des Verfahrens.

Verschiedene Sorten thermoplastischer Kunststoffe erweichen bei unterschiedlichen Temperaturen bzw. in unterschiedlichen Temperaturbereichen. Die mit der Erweichung stattfindende Änderung der physikalischen Eigenschaften von Thermoplasten können zur Sortierung von Kunststoffen oder zur Separation von Kunststoffen aus Materialien, wie Glas oder Metall genutzt werden. Diese Aufgabe stellt sich vor allem bei Recycling. Dazu müssen die Kunststoffe ihrer Sorte entsprechend selektiv erweicht und durch geeignete Vorrichtungen aus einem Gemengestrom entfernt werden.

Es ist Stand der Technik, thermoplastische Kunststoffe aus einem Gemengestrom auszusortieren, indem der Gemengestrom mit einer in ausreichendem Maße beheizten Trennfläche in Berührung gebracht und die Kunststoffpartikel durch Anschmelzen ihrer Kontaktbereiche zur Trennfläche an dieser festkleben und somit aus dem Gemengestrom entfernt und nachfolgend separat abgerakelt werden können (DE-37 22 777 C2).

Da dieses Separationsprinzip auf dem Klebeverhalten der nahezu schmelzflüssig erweichten zu separierenden Kunststoffe beruht, ist es empfindlich gegenüber praxisnahen Verschmutzungen, wie sie beim Recycling von Kunststoffen auftreten. Anhaftende Feuchtigkeit, Reststoffe der ursprünglichen Füllgüter oder Etiketten können eine Klebung behindern. Die mengenmäßig interessanten polyolefinischen Kunststoffe sind von Natur aus schlechte Klebstoffe und deshalb dieser Separation schlecht zugänglich.

Darüber hinaus wird bei dieser Vorgehensweise während der Betriebszeit die Trennfläche zunehmend mit einer Schicht der erweichten Thermoplasten belegt. Diese Schicht vermindert die Wirksamkeit des Verfahrens zum einen durch eine schlechtere Wärmeübertragung, zum anderen dadurch, daß aufgrund der Klebewirkung von erweichtem Thermoplastmaterial an dieser Schicht auch solche Kunststoffteile anhaften können, die bei der entsprechenden Temperatur selbst nicht erweicht sind und die somit nicht zur Zielfraktion zählen. Eine Sortenreinheit der Zielfraktion ist somit in Frage gestellt.

Bei dem Trennverfahren nach der WO-A-88/000 98 werden die thermo-plastischen Kunststoffteile nicht durch selektives Erwärmen erweicht und insbesondere nicht "in sortenspezifisch definierten Temperaturbereichen". Die Teile werden aufgrund der Temperatur von mit ihnen in Berührung gebrachten Metallflächen gegenüber diesen klebfähig und angeschmolzen. Dabei ist in ganz besonderer Weise herauszustellen, daß die zur Durchführung des Verfahrens erforderlichen Vorrichtungselemente außerordentlich kompliziert und kostenträchtig sind. Es ist insbesondere unerfindlich, wie die mit der exzentrisch gelagerten Nadelwalze umlaufenden Nadeln bzw. Lanzen mit der Beheizung aus dem Inneren einer Trommel so genau auf Temperatur gebracht werden können, daß vorher nicht erwärmte Kunststoffteilchen beim Darüberlaufen angeschmolzen werden können.

Ein weiterer Nachteil dieser nach dem unbefriedigenden Separationsprinzip durch Klebung arbeitenden Vorrichtung und Verfahren beruht darin, daß hier besondere Reinigungsvorrichtungen zum Abreinigen der zunächst auf den erhitzten Oberflächen verbleibenden Kunststoff-Schmelzreste vorgesehen sein müssen. Verwendet wird hierfür eine gesonderte Brenneranordnung zum Abflammen der Walzenaußenfläche, wonach anschließend verbleibende Rückstände abgebürstet oder auf andere Art entfernt werden müssen.

Die GB-A-22 40 731 ist ebenfalls dem Separationsprinzip durch Klebung oder adhäsives Verhalten Kunststoffteile zuzuordnen. Dort heißt es, daß die trockenen Partikel einem aufgeheizten, sich bewegenden Substrat aufgegeben werden, an welchem die Plastikmaterialien mit tieferem Erweichungspunkt ankleben und die Partikel mit höherem Erweichungspunkt frei darüber hinwegfließen etc.

Diesem Separationsprinzip durch Klebung ist auch die Vorrichtung nach JP-A-54 022 477 und nach US-A-3 793 424 zuzuordnen. Dort befindet sich im Zentrum einer Fangkammer ein elektrisch beheizter Zylinder mit konischem Ende. Durch diesen wird ein Kunststoffteil punktförmig aufgeschmolzen und dringt mit der Schmelze im Bereich der Fangkammer ein. Das Verfahren umfaßt folgende Schritte:
(a) lokale Heizung einer schmalen Stelle im thermoplastischen Material mit dem konischen Ende eines Heizelementes von hoher thermischer Leitfähigkeit,
(b) in Verbindungbringen dieses Materials mit einem zweiten Element von geringer thermischer Leitfähigkeit mit einer Fangkammer
(c) Fortsetzung der Beheizung des Materials beim Eindringen von einem aufgeschmolzenen Teil in den vergrößerten Raum der Fangkammer,
(d) Abkühlenlassen des geschmolzenen Plastikmaterials beim Einbringen in die Fangkammer.

Die entsprechende Vorrichtung mit individuell elektrisch beheizten Aufschmelzkörpern und diesen zugeordneten, teilweise von Kühlkanälen durchzogenen Fangkörpern ist außerordentlich kompliziert, dabei störanfällig, hinsichtlich der Temperatureinstellung schwer zu regeln und in Anbetracht der zeitaufwendigen Arbeitsschritte (a) bis (d) für einen wirtschaftlichen Betrieb ungeeignet. Die Kunststoffteile werden folglich nicht in einem definierten Temperaturbereich erweicht, sondern werden durch erhitzte Körper im Kontakt mit diesen zum Aufschmelzen gebracht.

Der Erfindung liegt die Aufgabe zugrunde, ein Verfahren und eine Vorrichtung zum Aussortieren thermoplastischer Kunststoffteile aus einem Gemengestrom und zum Sortieren unterschiedlicher thermoplastischer Kunststoffarten anzugeben, welches die Nachteile der auf einer Klebung basierenden Trennung überwindet und das Separationsprinzip nicht mehr auf einer Klebung bzw. dem adhäsiven Verhalten der erweichten Thermoplaste beruht, sondern auf einer selektiven mechanischen Verankerung an in besonderer Weise ausgebildeten Separierkörpern.

Zur Lösung der Aufgabe wird bei einem Verfahren der eingangs genannten Art mit der Erfindung vorgeschlagen, daß die Kunststoffteile durch Erwärmen im Gemengestrom in definierten Temperaturbereichen sortenspezifisch erweicht werden, bevor sie von den Separierkörpern erfaßt werden, wonach die erweichten Kunststoffteile an den Separierkörpern, die in die erweichten Oberflächen der Kunststoffteile eindringen oder die erweichten Oberflächen durchstoßen, fixiert und schließlich von den Separierkörpern abgenommen werden.

Mit Vorteil beruht somit im Gegensatz zum unbefriedigenden Separationsprinzip durch Klebung oder adhäsives Verhalten, das erfindungsgemäße Verfahren auf einer mechanischen Fixierung der Kunststoffteile. Dabei dringen Separierlörper entweder in die ausreichend erweichten Oberflächen der Kunststoffteile ein oder durchstoßen diese, wobei die Kunststoffteile sicher fixiert und danach von den Separierkörpern durch mechanische Mittel abgenommen werden. Damit werden die Kunststoffteile einer Kunststoffsorte, die bei der angewandten Verfahrenstemperatur in ausreichendem Maße erweicht sind, so daß die Separierkörper in deren Oberflächen eindringen können, von Kunststoffteilen anderer Kunststoffsorten selektiert, die bspw. bei der angewandten Temperatur noch keine Erweichung ihrer Struktur aufweisen. Ähnlich verhält es sich dann auch mit Fremdkörpern aus Metall, Papier, Keramik oder ähnlichen Stoffen, welche einer selektiven Erweichung durch Erwärmung nicht zugänglich sind.

Eine Ausgestaltung des Verfahrens sieht vor, daß das Eindringen der Separierkörper in die Oberfläche der beim sortenspezifischen Erwärmen erweichten Kunststoffteile unter dem Einfluß von Schwerkraft der Kunststoffteile erfolgt.

Je nach dem Erweichungsgrad der zu selektierenden Kunststoffsorte kann nach einem weiteren erfindungsgemäßen Vorschlag vorgesehen sein, daß das Eindringen von Separierkörpern in die Oberflächen der beim sortenspezifischen Erwärmen erweichten Kunststoffteile durch in einem Spalt zwischen einer Stützfläche und einem Separierkörper erzeugte Preßkraft vorgenommen wird.

Hierbei sieht eine Ausgestaltung vor, daß die zum Eindringen der Separierkörper in die Oberfläche der beim sortenspezifischen Erwärmen erweichten Kunststoffteile erforderliche Kraft durch elastisches Zurückweichen von Stützfläche oder Separierkörper sowie durch die Größe und Form der Kunststoffteile bestimmt wird. Dies ermöglicht eine äußerst gleichmäßige Einstellung und Einhaltung der im Spalt zwischen Stützfläche und Separierkörper erzeugten Preßkraft.

Schließlich sieht eine Ausgestaltung des Verfahrens vor, daß die Oberflächen der Separierkörper mit einer Anti-Haftbeschichtung überzogen werden. Dieser Verfahrensschritt ist unkompliziert und ergibt eine sichere Abnahme der den Separierkörpern anhaftenden Kunststoffteile, weshalb die Funktionsbereitschaft der Separierkörper im Verlauf des Sortierverfahrens unverändert erhalten bleibt.

Eine Vorrichtung zur Durchführung des erfindungsgemäßen Verfahrens ist gekennzeichnet mit wenigstens einem förderwirksamen Separierkörper mit ebener oder gekrümmter Oberfläche mit Strukturen zum Eindringen in die oder zum Durchstoßen der zuvor durch sortenspezifische Erwärmung selektiv erweichten Kunststoffteile sowie zum Festhalten der Kunststoffteile am Separierkörper und mit Mitteln zum Abnehmen der am Separierkörper fixierten Kunststoffteile nach ihrer Entfernung aus dem Gemengestrom und mit Mitteln zur Erzeugung definierter Temperaturbereiche zur selektiven Erwärmung der Kunststoffteile im Gemengestrom vor deren Erfassung durch die Separierkörper.

Ein besonderer Vorteil dieser Vorrichtung ist ihre äußerst unkomplizierte Ausgestaltung. Dabei können entsprechend den Merkmalen von Unteransprüchen Ausgestaltungen vorgesehen sein, wobei die struktierten Oberflächen der Separierkörper durch Rillen oder Rändelungen gebildet sind. Dabei können die Spitzen der Rillen oder Rändelungen in erweichte Kunststoffteile eindringen und diese festhalten. Die gerillten oder gerändelten Oberflächen haben den Vorteil, daß auch vergleichsweise kleine Kunststoffteile, wie sie im Zerkleinerungsvorgang anfallen, separiert werden können. Dabei können die gerillten oder gerändelten Oberflächen Oberflächen von Walzen sein.

Eine Ausgestaltung sieht vor, daß die Separierkörper Walzen, Bänder oder Platten sind, die mit Borsten, Nadeln, Stiften oder Lamellen bestückt sind. Mit der entsprechenden Auswahl einer geeigneten Oberflächenstruktur von Separierkörpern kann der Fachmann nach Maßgabe des zu separierenden Materials ein Sortierverfahren gezielt optimieren.

Eine Ausgestaltung sieht vor, daß der Separierkörper mit einer Stützfläche einen Spalt bildet. Dabei kann die Stützfläche eine Andrückwalze oder ein vorbeilaufendes Transportband sein, wobei das Transportband an der zu stützenden Stelle durch eine oder mehrere Andrückwalzen an den Separierkörper angedrückt wird. Die Andrückwalzen können aus Metall, Kunststoff oder weichelastischen Materialien wie Gummi oder Schaumstoff bestehen oder einen aufblasbaren Gummi- oder Kunststoffmantel in Walzenform besitzen. Die Auswahl des hierfür geeigneten Werkstoffes bzw. einer Werkstoffkombination erfolgt im Hinblick auf die mechanischen Anforderungen an die Separierkörper.

Vorteilhaft können Separierkörper mit einer Antihaftschicht versehen sein, wodurch sich einerseits nur streng definierte Kunststoffteile aufgrund der Oberflächenstruktur fixieren lassen und andererseits die fixierten Kunststoffteile beim Abrakeln restlos entfernt werden. Negative Effekte bspw. durch Anhaften einer erweichten Thermoplastschicht an der Oberfläche der Separierkörper werden durch eine Antihaftschicht vermieden.

Eine Ausgestaltung sieht vor, daß mehrere gleich oder verschieden ausgebildete Vorrichtungen kaskadenförmig hintereinander gestaltet sind. Durch eine solche Hintereinanderschaltung mehrerer erfindungsgemäßer Vorrichtungsteile kann bspw. durch gezielte Temperaturführung eine Separation unterschiedlicher Sorten in einem Durchgang ermöglicht werden.

Weitere Einzelheiten, Merkmale und Vorteile der Erfindung ergeben sich aus der nachstehenden Erläuterung mehrerer in der Zeichnung schematisch dargestellter Ausführungsbeispiele. Es zeigen:
- Figur 1: Separierkörper in Walzenform mit unterschiedlichen Obenflächenstrukturen, teilweise in perspektivischer Ansicht sowie Ansichten von der Seite und vor Kopf;
- Figur 2: unterschiedliche Oberflächenstrukturen der Separierkörper, teilweise im Schnitt;
- Figur 3: eine Seitenansicht einer Separiervorrichtung;
- Figur 4: eine Seitenansicht einer anderen Separiervorrichtung;
- Figur 5: eine Seitenansicht einer Separiervorrichtung mit elastischer Andruckwalze;
- Figur 6: eine Seitenansicht einer Separiervorrichtung mit Separierwalze und beheizten Stiften;
- Figur 7: eine Seitenansicht von drei kaskadenförmig untereinander angeordneten Separiervorrichtungen.

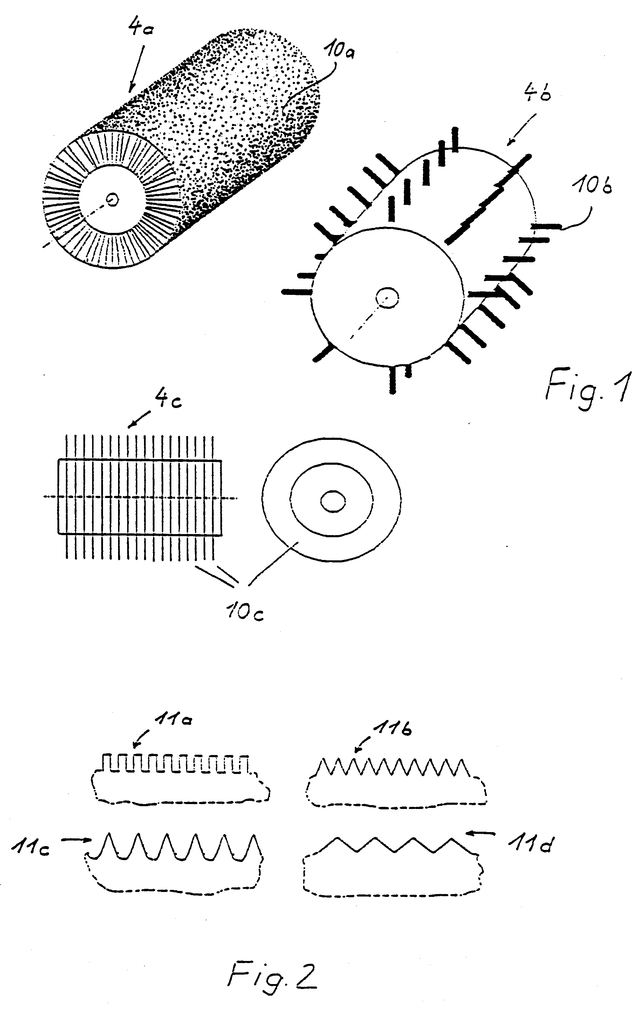

Figur 1 zeigt drei als Walzen ausgebildete Separierkörper 4a, 4b und 4c mit unterschiedlich strukturierten Oberflächen. Der walzenförmige Separierkörper 4a ist mit einer Bürstenstruktur 10a als sogenannte Bürstenwalze ausgebildet. Dabei können die, die Bürstenoberfläche bildenden Borsten aus Draht oder sehr harten Kunststoffdrähten bestehen. Der Separierkörper 4b weist eine mit Stiften versehene Oberfläche 10b auf. Diese Stifte (10b) können bspw. zwecks guter Wärmeleitfähigkeit aus hochwärmeleitfähigem Material wie Kupfer, Silber oder Messing bestehen und sind in Durchmesser und Länge nach Ermessen des Fachmannes der zu lösenden Sortieraufgabe optimal angepaßt.

Schließlich zeigt Figur 1 eine Lamellenwalze 4c mit kreisringförmigen Lamellen.

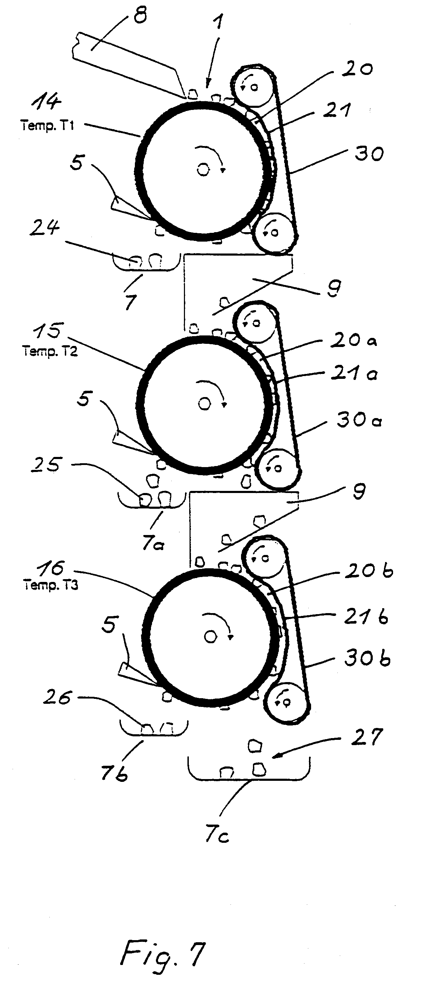

Die Oberflächengestaltung der als Separierkörper 4a bis 4c ausgebildeten Walzen sind der jeweiligen Sortieraufgabe unterschiedlicher Kunststoffsorten optimal angepaßt. Grundlage hierfür ist das Erweichungsverhalten thermoplastischer Kunststoffe, wobei diese einen für jede Kunststoffsorte charakteristischen Temperaturbereich aufweisen, bei dessen Erreichen sie aus dem festen Zustand in den erweichten, gummi-elatischen Zustand übergehen. Liegen nun mehrere unterschiedliche Kunststoffsorten oder auch andere Stoffsorten in einem Gemenge vor, so kann durch eine selektive Erwärmung eine ausgewählte Thermoplastsorte selektiv erweicht werden. Solche erweichten Thermoplaste haben im Gemengestrom der als weitere Komponenten harte Materialien enthalten kann, ein grundsätzlich anderes elastisches Verhalten, als die anderen Komponenten. Die Nutzung dieses Unterschiedes im elastischen Verhalten für eine selektive Fixierung an den erfindungsgemäß vorgesehenen Separierkörpern 4a bis 4c (Figur 1) bzw. 14, 15, 16 (Figur 7), mittels erfindungsgemäßer Strukturen an den Separierkörpern stellt den Kern der vorliegenden Erfindung dar.

Bei Stift- oder Lamellenwalzen 4b, 4c ist es möglich, die Stifte oder Lamellen 10b oder 10c auf der Walze elastisch auszubilden oder elastisch zu befestigen, so daß sie sich einzeln an die jeweiligen Abmessungen der Teile des Gemengestromes anpassen können. Bei einer Bürstenwalze 4a ist dies durch die Elastizität der einzelnen Borsten 10a möglich.

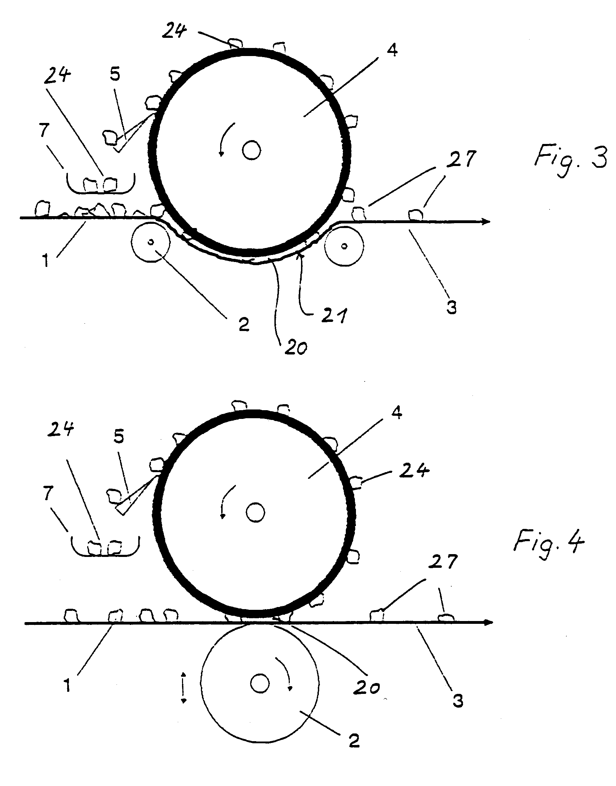

Vorteilhaft können auch Separierkörper mit definiert strukturierten Oberflächen genutzt werden. Solche Oberflächen sind rein schematisch in der Figur 2 dargestellt und weisen ähnliche kammartige Querschnitte 11a bis 11d auf. Diese bilden Oberflächenrillen oder -rändelungen mit mehr oder weniger ausgeprägten Spitzen. Die Rillenspitzen können je nach Erweichungsgrad in den Kunststoff eindringen und die entsprechenden Teile festhalten. Gerillte Oberflächen 11a bis 11d haben den Vorteil, daß auch kleine Kunststoffteile, wie sie im Zerkleinerungsvorgang entstehen, separiert werden können.

Separierkörper 4a bis 4c bzw. Separierwalzen 14, 15, 16 können aus unterschiedlichen Werkstoffen und Werkstoffkombinationen, bspw. aus oberflächenbeschichtetem Metall bestehen, soweit sie den thermischen und mechanischen Ansprüchen genügen. Es kann bspw. von Vorteil sein, Separierkörper aus einem Material mit guter Wärmeleitfähigkeit zu verwenden, weil hierdurch eine für das Erweichen der Kunststoffteile erforderliche Wärme zum Kontaktbereich geleitet wird.

Die Figuren 3 bis 6 zeigen Vorrichtungen zur Durchführung des erfindungsgemäßen Verfahrens mit unterschiedlichen Ausgestaltungen. Figur 3 zeigt einen walzenförmigen Separierkörper 4 mit beliebiger (im einzelnen nicht dargestellter) Oberflächenstruktur. Ein Transportband 3 führt von der linken Seite einen Gemengestrom 1 mit unterschiedlichen Kunststoffteilen und fallweise Fremdstoffanteilen in einem zwischen der Separierwalze 4 und dem Transportband 3 gebildeten Transportspalt 20 entlang. Dieser Transportspalt 20 ist zwischen zwei das Transportband 3 führenden Stützwalzen 2 und der Oberfläche der Separierwalze 4 gebildet. Selektiv erwärmte Kunststoffteile 24 bleiben in der Oberflächenstruktur der Separierwalze 4 fixiert hängen und werden auf der ablaufenden linken Seite durch ein Rakel 5 abgerakelt und in die Abführrinne 7 abgeworfen. Von der Separierwalze 4 nicht erfaßte Fremdstoffteile 27 bleiben weiterhin auf dem Transportband 3 liegen und werden an anderer Stelle gesammelt.

Die Vorrichtung gemäß Darstellung in der Figur 4 unterscheidet sich nur unwesentlich von der Ausführung nach Figur 3. Anstelle des vergleichsweise langen Spaltes 20 zwischen einer vom Transportband 3 gebildeten Stützfläche 21 ist bei der Vorrichtung nach Figur 4 ein vergleichsweise kurzer Spalte zwischen der Stützwalze 2 und der Separierwalze 4 gebildet.

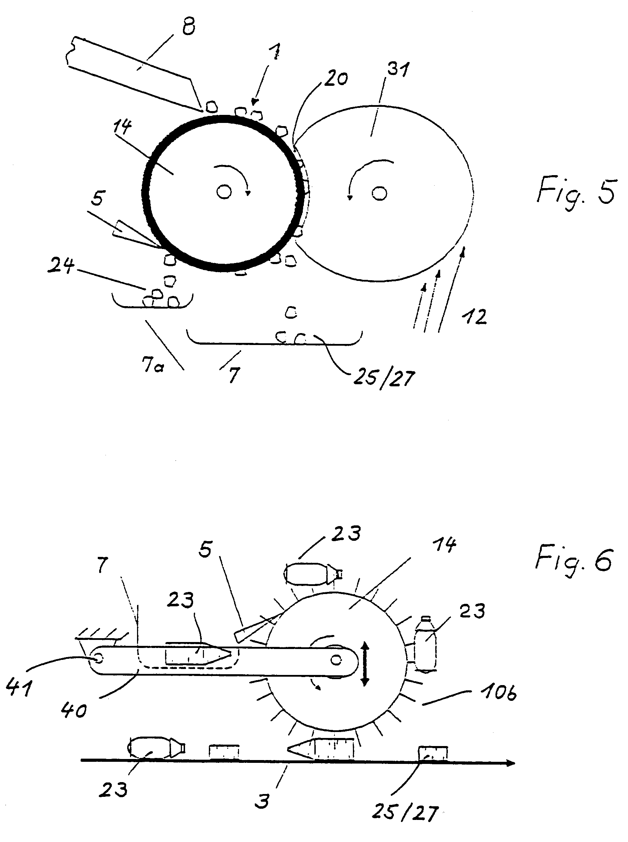

Figur 5 zeigt eine andere Ausführung der Vorrichtung, wobei als Stützwalze eine gasgefüllte hochelastische Andruckwalze 31 verwendet ist. Der Gemengestrom 1 wird von oben mit einer Zuführrinne 8 zugeführt und passiert dann nach kurzem Transport auf der Oberfläche der Separierwalze 14 den Spalt 20 in einem annähernd vertikalen Oberflächenbereich zwischen Separierwalze 14 und elastischer Andruckwalze 31. Bei dieser Anordnung kann bspw. die Maßnahme getroffen sein, daß die Separierwalze 14 mittels entsprechender Aufheizung, bspw. von innen her, für den Wärmetransport auf die zu separierenden Kunststoffteile im Gemengestrom 1 ausgebildet ist. Um die elastische Andruckwalze 31 thermisch nicht zu überlasten, ist ein Kühlluftstrom 12 vorgesehen, unter dessen Einfluß sich ein Gleichgewicht in der Oberflächentemperatur der elastischen Andruckwalze 31 auf einem zulässigen Niveau einstellt. An der Separierwalze 14 fixierte Kunststoffteile 24 einer Sorte werden mit dem Rakel 5 abgerakelt und in die Rinne 7a ausgeworfen. Von der Separierwalze 14 nicht erfaßte Teile anderer Kunststoffsorten oder Fremdstoffe 25/27 werden in die Abführrinne 7 abgeworfen.

Figur 6 zeigt eine andere Variante der Vorrichtung, wobei die Separierwalze 14 mit beheizten Stiften 10b ausgebildet ist. Das Förderband 3 fördert Kunststofflaschen 23 und andere Kunststoffsorten oder Fremdteile 25/27 unterhalb der Separierwalze 14 entlang. Diese ist mit einem annähernd horizontalen Arm 40 an einem Gelenk 41 angelenkt und in einer an sich bekannten Weise bspw. durch ein Rückstellelement oder ein Gegengewicht weitgehend gewichtsentlastet. Die Separierwalze 14 rollt infolge dieser Gewichtsentlastung mit exakt einstellbarer Kraft über die Teile des Gemengestromes, wobei die beheizten Stifte 10b in eine selektiv erweichbare Sorte von Kunststofflaschen 23 eindringen und diese mit der Separierwalze 14 über Kopf transportieren, bis sie durch das Rakel 5 abgerakelt und in die Abführrinne 7 ausgeworfen werden. Die nicht erweichbaren Kunststoffe oder Fremdstoffe 25/27 werden mit dem Transportband zu einer weiteren Sammelstation abgeführt. Bei dieser Anordnung ist im Gemengestrom sehr vorteilhaft eine Separation von Kunststoff-Hohlkörpern, wie Kunststofflaschen von Nicht-Kunststoffprodukten, wie bspw. Glas- oder Metallbehältern möglich. Im Vergleich zu anderen Separierverfahren, die auf dem spezifischen Gewicht basieren, ist dieses Verfahren nicht störempfindlich gegenüber noch enthaltendenen Füllgutresten. Die Stifte 10b der Separierwalze 14 können zu diesem besonderen Zweck mit Widerhaken versehen sein, die eine sichere Fixierung bspw. von Kunststofflaschen unterstützen. Diese Widerhaken hindern auch das Abrakeln nicht, weil dabei mit einem genügend stabilen Rakel auch stärker fixierte Kunststoffteile gerakelt werden.

In der Figur 7 ist bspw. eine Anordnung gezeigt, bei welcher durch die Hintereinanderschaltung mehrere erfindungsgemäße Vorrichtungen nach Art einer Kaskade durch gezielte Temperaturführung die Separation mehrerer unterschiedlicher Kunststoffsorten 24, 25, 26 sowie Fremdstoffe 27 problemlos erfolgen kann. Dabei können von oben nach unten gleiche oder unterschiedlich strukturierte Separierwalzen 14, 15, 16 verwendet werden. Jede einzelne Anordnung entspricht dabei der Ausführung gemäß Figur 5, wobei jeweils ein Separierspalt 20, 20a, 20b zwischen einer Separierwalze 14, 15, 16 und jeweils einer elastischen Andrückwalze 31 oder einer Stützfläche 21, 21a, 21b eines Andrückbandes 30, 30a, 30b hergestellt ist. Zum Auffangen der einzelnen Kunststoffsorten 24, 25, 26 dienen die Rinnen 7, 7a, 7b, und Zwischengut wird jeweils durch Schurren 9 von einer oberen Vorrichtung in eine darunterliegende geleitet.

Das Verfahren und die Vorrichtung nach der Erfindung sind unkompliziert, sehr zweckmäßig und sicher in der Funktion und verwirklichen eine außerordentlich wirtschaftliche Methode zur Sortierung von Kunststoffen beim Recycling. Dadurch erweist sich die Erfindung als ein Beitrag zur Umweltentlastung von Abfällen mit einer sehr hohen volkswirtschaftlichen Bedeutung.

## Patentansprüche

1. Verfahren zum Aussortieren thermoplastischer Kunststoffteile (23 - 26) aus einem Gemengestrom beim Sortieren unterschiedlicher thermoplastischer Kunststoffsorten im Kontakt mit Separierkörpern (4, 14 - 16),
**dadurch gekennzeichnet,**
daß die Kunststoffteile (23 - 26) durch Erwärmen im Gemengestrom in definierten Temperaturbereichen sortenspezifisch erweicht werden, bevor sie von den Separierkörpern (4, 14 - 16) erfaßt werden, wonach die erweichten Kunststoffteile (23 - 26) an den Separierkörpern (4, 14 - 16), die in die erweichten Oberflächen der Kunststoffteile (23 - 26) eindringen oder die erweichten Oberflächen durchstoßen, fixiert und schließlich von den Separierkörpern (4, 14 - 16) abgenommen werden.

2. Verfahren nach Anspruch 1,
**dadurch gekennzeichnet,**
daß das Eindringen der Separierkörper (4, 14 - 16) in die Oberflächen der beim sortenspezifischen Erwärmen erweichten Kunststoffteile (23 - 26) unter dem Einfluß der Schwerkraft der Kunststoffteile (23 - 26) vorgenommen wird.

3. Verfahren nach Anspruch 1,
**dadurch gekennzeichnet,**
daß das Eindringen der Separierkörper (4, 14 - 16) in die Oberflächen der beim sortenspezifischen Erwärmen erweichten Kunststoffteile (23 - 26) durch in einem Spalt (20) zwischen einer Stützfläche (1 - 3, 21, 30, 31) und einem Separierkörper (4, 14 - 16) erzeugte Preßkraft vorgenommen wird.

4. Verfahren nach einem oder mehreren
der Ansprüche 1 bis 3,
**dadurch gekennzeichnet,**
daß die zum Eindringen der Separierkörper (4, 14 - 16) in die Oberflächen der beim sortenspezifischen Erwärmen erweichten Kunststoffteile (23 - 26) erforderliche Kraft durch elastisches Zurückweichen von Stützfläche (1 - 3, 21, 30, 31) oder Separierkörpern (4, 14 - 16) sowie durch Größe und Form der Kunststoffteile (23 - 26) bestimmt wird.

5. Verfahren nach einem oder mehreren
der Ansprüche 1 bis 4,
**dadurch gekennzeichnet,**
daß die Oberflächen der Separierkörper (4, 14 - 16) mit einer Anti-Haftbeschichtung überzogen werden.

6. Verfahren nach einem oder mehreren der Ansprüche 1 bis 5,
**dadurch gekennzeichnet,**
daß die Separierkörper zusätzlich definiert erwärmt werden.

7. Vorrichtung zum Aussortieren von thermoplastischen Kunststoffteilen (23 - 26) beim Sortieren unterschiedlicher Sorten von Kunststoffabfällen, insbesondere zur Durchführung des Verfahrens nach den vorangehenden Ansprüchen,
**gekennzeichnet**
mit wenigstens einem förderwirksamen Separierkörper (4, 14 - 16) mit ebener oder gekrümmter Oberfläche mit Strukturen (10, 11) zum Eindringen in die oder zum Durchstoßen der zuvor durch sortenspezifische Erwärmung selektiv erweichten Kunststoffteile (23 - 26) sowie zum Festhalten der Kunststoffteile (23 - 26) am Separierkörper (4, 14 - 16) und mit Mitteln zum Abnehmen der am Separierkörper (4, 14 - 16) fixierten Kunststoffteile (23 - 26) nach ihrer Entfernung aus dem Gemengestrom (1), und mit Mitteln zur Erzeugung definierter Temperaturbereiche zur selektiven Erwärmung der Kunststoffteile (23 - 26) im Gemengestrom vor deren Erfassung durch die Separierkörper (4, 14 - 16).

8. Vorrichtung nach Anspruch 7,
**dadurch gekennzeichnet,**
daß ein Separierkörper (4, 14 - 16) eine strukturierte Oberfläche aufweist, die durch Rillen oder Rändelung (11a bis 11c) gebildet ist.

9. Vorrichtung nach Anspruch 7,
**dadurch gekennzeichnet,**
daß Separierkörper (4) Walzen, Bänder oder Platten und mit Borsten (4a), Nadeln, Stiften (4b) oder Lamellen (4c) bestückt sind.

10. Vorrichtung nach den Ansprüchen 8 bis 9,
**dadurch gekennzeichnet,**
daß ein Separierkörper (4, 14 - 16) mit einer Stützfläche (2, 3, 21, 30, 31) einen Spalt bildet und die Stützfläche dabei von einer Andrückwalze (2, 31) oder von einem vorbeilaufenden Band (3, 30) gebildet ist, wobei dieses fallweise an der zu stützenden Stelle durch eine oder mehrere Andrückwalzen (2) an den Separierkörper (4) angedrückt wird.

11. Vorrichtung nach Anspruch 10,
**dadurch gekennzeichnet,**
daß Andrückwalzen (2, 31) aus Metall, Kunststoff oder weichelastischen Materialien wie Gummi oder Schaumstoff bestehen oder mit einem aufblasbaren Mantel (31) aus Gummi oder Kunststoff ausgebildet sind.

12. Vorrichtung nach einem oder mehreren
der Ansprüche 7 bis 11,
**dadurch gekennzeichnet,**
daß die Oberflächen der Separierkörper (4, 14 - 16) mit einer Antihaft-Beschichtung versehen sind.

13. Vorrichtung nach einem oder mehreren der Ansprüche 7 bis 12,
**gekennzeichnet durch**
zusätzlich definiert erwärmte Separierkörper (4, 14-16).

14. Vorrichtung nach einem oder mehreren
der Ansprüche 7 bis 12,
**dadurch gekennzeichnet,**
daß mehrere gleich oder verschieden ausgebildete Vorrichtungen (14 bis 16) kaskadenförmig hintereinander geschaltet sind.

## Claims

1. Method for the separating out of thermoplastic plastics material components (23 to 26) from a mixed stream during sorting of different thermoplastic plastics material kinds in contact with separating bodies (4, 14 to 16), characterised thereby that the plastics material components (23 to 26) are softening specific to kind by heating in the mixed stream in defined temperature ranges before they are engaged by the separating bodies (4, 14 to 16), after which the softened plastics material components (23 to 26) are fixed at the separating bodies (4, 14 to 16), which penetrate into the softened surfaces of the plastics material components (23 to 26) or pierce the softened surfaces, and are finally taken away by the separating bodies (4, 14 to 16).

2. Method according to claim 1, characterised thereby that the penetration of the separating bodies (4, 14 to 16) into the surfaces of the plastics material components (23 to 26), which are softened during the heating specific to kind, is effected under the influence of the gravitational force of the plastics material components (23 to 26).

3. Method according to claim 1, characterised thereby that the penetration of the separating bodies (4, 14 to 16) into the surfaces of the plastics material components (23 to 26), which are softened during the heating specific to kind, is effected by pressure force exerted in a gap (20) between a support surface (1 to 3, 21, 30, 31) and a separating body (4, 14 to 16).

4. Method according to one or more of claims 1 to 3, characterised thereby that the force required for the penetration of the separating bodies (4, 14 to 16) into the surfaces of the plastics material components (23 to 26), which are softened during the heating specific to kind, is determined by elastic yielding of the support surfaces (1 to 3, 21, 30, 31) or separating bodies (4, 14 to 16) as well as by size and shape of the plastics material components (23 to 26).

5. Method according to one or more of claims 1 to 4, characterised thereby that the surfaces of the separating bodies (4, 14 to 16) are coated with an anti-adhesion coating.

6. Method according to one or more of claims 1 to 5, characterised thereby that the separating bodies are additionally heated in defined manner.

7. Device for the separating out of thermoplastic plastics material components (23 to 26) during sorting of different kinds of plastics wastes, especially for the performance of the method according to the preceding claims, characterised by at least one separating body (4, 14 to 16), which is effective as conveyor, with flat or curved surface with structures (10, 11) for penetration into or piercing of the plastics material components (23 to 26), which are previously selectively softened by heating specific to kind, as well as for firmly holding the plastics material components (23 to 26) at the separating bodies (4, 14 to 16), and by means for taking away of the plastics material components (23 to 26), which are fixed at the separating bodies (4, 14 to 16), after their removal from the mixed stream (1), and by means for generation of defined temperature ranges for the selective heating of the plastics material components (23 to 26) in the mixed flow before engagement thereof by the separating bodies (4, 14 to 16).

8. Device according to claim 7, characterised thereby that a separating body (4, 14 to 16) has a structured surface which is formed by grooving or milling (11a to 11c).

9. Device according to claim 7, characterised thereby that the separating bodies (4) are rollers, belts or plates and equipped with brushes (4a), needles, pins (4b) or platelets (4c).

10. Device according to claims 8 to 9, characterised thereby that a separating body (4, 14 to 16) forms a gap with a support surface (2, 3, 21, 30, 31) and the support surface in that case is formed by a presser roller (2, 31) or a running belt (3, 30), wherein this is, from case to case, pressed against the place to be supported by one or more presser rollers (2) at the separating bodies (4).

11. Device according to claim 10, characterised thereby that the presser rollers (2, 31) consist of metal, plastics material or soft elastic materials such as rubber or foam material or are formed from rubber or plastics material with an inflatable jacket (31).

12. Device according to one or more of claims 7 to 11, characterised thereby that the surfaces of the separating bodies (4, 14 to 16) are provided with an anti-adhesion coating.

13. Device according to one or more of claims 7 to 12, characterised by separating bodies (4, 14 to 16) additionally heated in defined manner.

14. Device according to one or more of claims 7 to 12, characterised thereby that several identically or differently constructed devices (14 to 16) are connected one after the other in the manner of a cascade.

## Revendications

1. Procédé pour la séparation de fractions de matières synthétiques thermoplastiques (23-26) d'un flux de mélange, lors de la séparation de divers types de matières synthétiques thermoplastiques par contact avec des organes de séparations (4,14-16), caractérisé en ce qu'on ramollit les fractions de matières synthétiques (23-26) selon les types, par chauffage à contre-courant dans des domaines de température définis, avant qu'elles ne passent dans les organes de séparation (4,14-16), en ce qu'on fait ensuite adhérer lesdites fractions ramollies (23-26) aux organes de séparation (4,14-16) qui pénètrent dans les surfaces ramollies des fractions de matières synthétiques (23-26) ou transpercent lesdites surfaces ramollies, et on les retire finalement des organes de séparation (4,14-16).

2. Procédé selon la revendication 1
caractérisé en ce que la pénétration des organes de séparation (4,14-16) dans les surfaces des fractions en matière synthétique ramollies par chauffage spécifique au type de matière synthétique s'effectue sous l'effet de la force de gravité des fractions en matière synthétique (23-26).

3. Procédé selon la revendication 1
caractérisé en ce que la pénétration des organes de séparation (4,14-16) dans les surfaces des fractions en matière synthétique ramollies par chauffage spécifique au type de matière synthétique s'effectue sous l'effet d'une force de compression générée dans une fente (20) comprise entre une surface d'appui (1-3,21,30,31) et un organe de séparation (4,14-16).

4. Procédé selon l'une ou plusieurs des revendications 1 à 3
caractérisé en ce qu'on détermine la force nécessaire à la pénétration des organes de séparation (4,14-16) dans les surfaces des fractions en matière synthétique (23-26) ramollies lors du chauffage spécifique selon les types de matière synthétique, par la rétraction élastique de la surface d'appui (1-3,21,30,31) ou des organes de séparation (4,14-16) ainsi que par les dimensions et forme desdites fractions de matire synthétique (23-26).

5. Procédé selon l'une ou plusieurs des revendications 1 à 4
caractérisé en ce que les surfaces des organes de séparation (4,14-16) sont revêtues d'une couche anti-adhésive.

6. Procédé selon l'une ou plusieurs des revendications 1 à 5
caractérisé en ce qu'on chauffe encore les organes de séparation de façon définie.

7. Installation pour la séparation de fractions de matières synthétiques thermoplastiques (23-26) lors de la séparation de divers types de déchets en matière synthétique, notamment pour le mise en oeuvre du procédé selon les revendications précédentes
caractérisée par
au moins un organe de séparation (4,14-16) à effet transporteur (4,1'-16), qui présente une surface plane ou courbe munie d'une texture (10,11) servant à pénétrer dans les fractions de matières synthétiques ou transpercer lesdites fractions de matières synthétiques qui ont préalablement été ramollies sélectivement par chauffage spécifique au type de matière (23-26), ainsi qu'à maintenir celles-ci (23-26) à l'organe de séparation (4,14-16); et
des moyens pour retirer les fractions de matière synthétique (23-26) adhérant à l'organe de séparation (4,14-16), après le retrait de celles-ci du flux de mélange (1), et des moyens pour générer des domaines de température définis pour le chauffage sélectif des fractions de matière synthétique (23-26) à contre-courant, avant passage dans les organes de séparation (4,14-16).

8. Installation selon la revendication 7
caractérisée en ce qu'un organe de séparation (4,14-16) présente une surface texturée qui est formée par des rainures ou cannelures (11a à 11c).

9. Installation selon la revendication 7
caractérisée en ce que l'organe de séparation (4), les cylindres, bandes ou plaques sont munies de poils de brosse (4a), d'aiguilles, de pointes (4b) ou de lamelles (4c).

10. Installation selon les revendications 8 à 9
caractérisée en ce qu'un organe de séparation (4,14-16) forme une fente avec une surface d'appui (2,3,21,30,31) et en ce que la surface d'appui est constituée par un cylindre d'appui (2,31) ou par une bande circulante (3,30), celle-ci étant appliquée, selon les cas , à l'endroit à appuyer, par un ou plusieurs cylindres d'appui (2) contre l'organe de séparation (4).

11. Installation selon la revendication 10,
caractérisée en ce que les cylindres d'appui (2,31) consistent en des matériaux métalliques, en matières synthétiques ou en des matériaux souples, comme le caoutchouc ou une mousse, ou bien comportent une enveloppe gonflable (31) en caoutchouc ou en une matière synthétique.

12. Installation selon l'une ou plusieurs des revendications 7 à 11 caractérisée en ce que les surfaces des organes de séparation (4, 14-16) sont munies d'un revêtement antiadhésif.

13. Installation selon l'une ou plusieurs des revendications 7 à 12 caractérisée par des organes de séparation (4,14-16) chauffés de façon définie.

14. Installation selon l'une ou plusieurs des revendications 7 à 12 caractérisée en ce que plusieurs installations identiques ou différentes (14 à 16) sont agencées en cascade l'une derrière l'autre.
